(19) **Europäisches Patentamt European Patent Office Office européen des brevets**

(11) **EP 4 150 804 B1**

(12) **EUROPEAN PATENT SPECIFICATION**

(45) Date of publication and mention
of the grant of the patent:
**30.07.2025 Bulletin 2025/31**

(21) Application number: **21725269.1**

(22) Date of filing: **07.05.2021**

(51) International Patent Classification (IPC):
*H04L 1/00* (2006.01)    *H04W 76/14* (2018.01)

(52) Cooperative Patent Classification (CPC):
**H04L 1/0026; H04W 52/0206; H04W 52/0216;
H04W 76/14; H04W 76/28;** H04W 76/19;
Y02D 30/70

(86) International application number:
**PCT/IB2021/053879**

(87) International publication number:
**WO 2021/229384 (18.11.2021 Gazette 2021/46)**

(54) **TRANSMITTING SIDELINK CONTROL INFORMATION INDICATING NO SIDELINK DATA**

ÜBERTRAGUNG VON SIDELINK-STEUERINFORMATIONEN ZUR ANZEIGE VON NICHT-SIDELINK-DATEN

TRANSMISSION D'INFORMATIONS DE COMMANDE DE LIAISON LATÉRALE N'INDIQUANT PAS DE DONNÉES DE LIAISON LATÉRALE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2020 US 202063022994 P**

(43) Date of publication of application:
**22.03.2023 Bulletin 2023/12**

(73) Proprietor: **Lenovo (Singapore) Pte. Ltd.
New Tech Park 556741 (SG)**

(72) Inventors:
• **LOEHR, Joachim
65203 Wiesbaden (DE)**
• **BASU MALLICK, Prateek
63303 Dreieich (DE)**
• **GANESAN, Karthikeyan
64569 Nauheim (DE)**
• **KUCHIBHOTLA, Ravi
Chicago, Illinois 60680 (US)**

(74) Representative: **Openshaw & Co.
8 Castle Street
Farnham, Surrey GU9 7HR (GB)**

(56) References cited:
• **SAMSUNG: "On Physical Layer Procedures for NR V2X", vol. RAN WG1, no. Reno, USA; 20190513 - 20190517, 13 May 2019 (2019-05-13), XP051728391, Retrieved from the Internet <URL:http://www.3gpp.org/ftp/Meetings% 5F3GPP%5FSYNC/RAN1/Docs/R1%2D1906941% 2Ezip> [retrieved on 20190513]**
• **LG ELECTRONICS INC (RAPPORTEUR): "Summary of contributions to MAC for 5G V2X with NR Sidelink", vol. RAN WG2, no. Online; 20200224 - 20200306, 24 February 2020 (2020-02-24), XP051850068, Retrieved from the Internet <URL:https://ftp.3gpp.org/tsg_ran/ WG2_RL2/TSGR2_109_e/Docs/R2-2001962.zip> [retrieved on 20200224]**
• **SAMSUNG: "On Physical Layer Procedures for NR V2X", vol. RAN WG1, no. Prague, CZ; 20190826 - 20190830, 17 August 2019 (2019-08-17), XP051765090, Retrieved from the Internet <URL:http://www.3gpp.org/ftp/tsg_ran/ WG1_RL1/TSGR1_98/Docs/R1-1908481.zip> [retrieved on 20190817]**

- **HUAWEI ET AL: "Sidelink physical layer procedures for NR V2X", vol. RAN WG1, no. Chongqing, China; 20191014 - 20191020, 8 October 2019 (2019-10-08), pages 1 - 30, XP051788866, Retrieved from the Internet <URL:http://www.3gpp.org/ftp/tsg_ran/ WG1_RL1/TSGR1_98b/Docs/R1-1910059.zip> [retrieved on 20191008]**

**Description**

CROSS-REFERENCE TO RELATED APPLICATIONS

This application claims priority to United States Patent Application Serial Number 63/022,994 entitled "APPARATUSES, METHODS, AND SYSTEMS FOR HARQ-BASED RLF MECHANISM NR V2X COMMUNICATION" and filed on May 11, 2020 for Joachim Löhr.

FIELD

The subject matter disclosed herein relates generally to wireless communications and more particularly relates to transmitting sidelink control information indicating no sidelink data.

BACKGROUND

In certain wireless communications networks, sidelink control information may be transmitted. Generally, sidelink control information is transmitted with data. D1 (R1-1906941) is a 3rd Generation Partnership Project (3GPP) discussion document titled "On Physical Layer Procedures for NR V2X" submitted by Samsung at TSG RAN WG1 #97 in Reno, USA, on 13th May 2019, and discusses the design for HARQ transmission, MIMO and CSI, and power control. D3 (R1-1908481) is a 3GPP discussion document titled "On Physical Layer Procedures for NR V2X" submitted by Samsung at TSG RAN WG1 #98 in Prague, CZ, on 26-30 August 2019. D4 (R1-1910059) is a 3GPP discussion document titled "Sidelink physical layer procedures for NR V2X" submitted by Huawei at TSG RAN WG1 #98bis in Chongqing, China, on 14-20 October 2019.

BRIEF SUMMARY

The invention is defined by the appended claims. Claim 1 defines a method and claim 3 defines an apparatus. In the following, any method and/or apparatus referred to as embodiments but nevertheless do not fall within the scope of the appended claims are to be understood as examples helpful in understanding the invention.

BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:

Figure 1 is a schematic block diagram illustrating one embodiment of a wireless communication system for transmitting sidelink control information indicating no sidelink data;
Figure 2 is a schematic block diagram illustrating one embodiment of an apparatus that may be used for transmitting sidelink control information indicating no sidelink data;
Figure 3 is a schematic block diagram illustrating one embodiment of an apparatus that may be used for transmitting sidelink control information indicating no sidelink data;
Figure 4 is a flow chart diagram illustrating one embodiment of a method for transmitting sidelink control information indicating no sidelink data;
Figure 5 is a flow chart diagram illustrating one embodiment of a method for a radio link failure procedure; and
Figure 6 is a flow chart diagram illustrating one embodiment of a method for a logical channel prioritization procedure.

DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

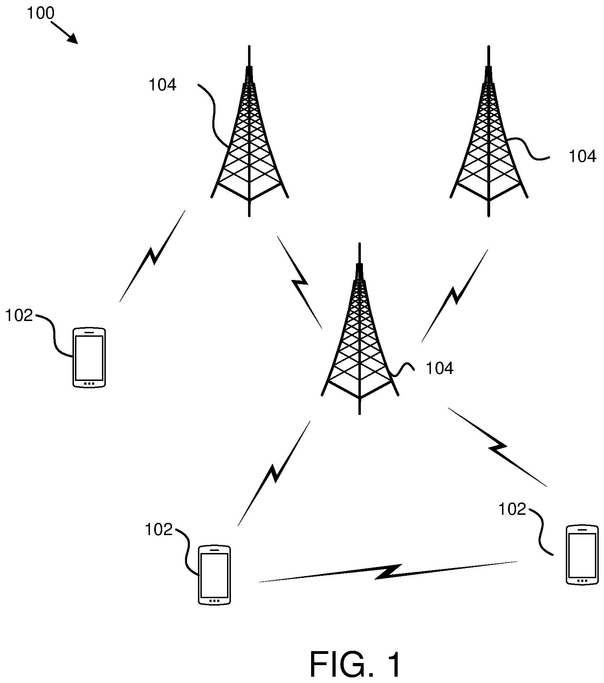

Figure 1 depicts an embodiment of a wireless communication system 100 for transmitting sidelink control information indicating no sidelink data. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, UE, user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a location server, a core network ("CN"), a radio network entity, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth®, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

According to the invention as claimed, a remote unit 102 determines, at a user equipment, that there is no sidelink data available for a destination. The remote unit 102 transmits sidelink control information to the destination that indicates that there is no sidelink data available for the destination and triggers a channel state information feedback response from the destination. The remote unit 102 monitors for reception of the channel state information feedback response from the destination. Accordingly, the remote unit 102 may be used for transmitting sidelink control information indicating no sidelink data.

In certain embodiments, a remote unit 102 may receive, at a user equipment, information indicating a discontinuous transmission. In some embodiments, the remote unit 102 may increment a discontinuous transmission counter of a radio link failure procedure. In various embodiments, the remote unit 102 may start a discontinuous transmission timer. Accordingly, the remote unit 102 may be used for a radio link failure procedure.

In certain embodiments, a remote unit 102 may perform, at a user equipment, a logical channel prioritization procedure. In some embodiments, the remote unit 102 may determine, based on the logical channel prioritization procedure, that a transport block contains only data of logical channels having hybrid automatic repeat request feedback disabled. In various embodiments, the remote unit 102 may transmit sidelink control information indicating that hybrid automatic repeat request feedback is enabled for transmission of the transport block. Accordingly, the remote unit 102 may be used for a logical channel prioritization procedure.

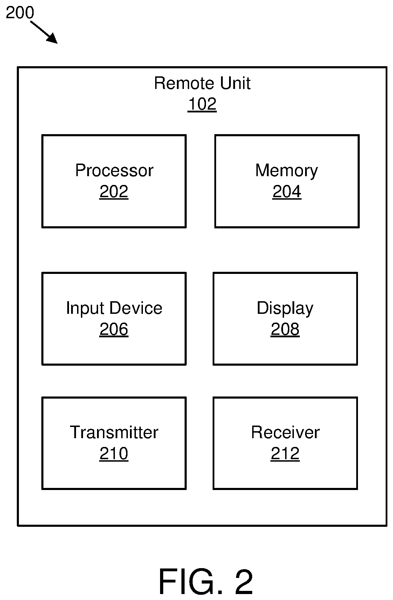

Figure 2 depicts one embodiment of an apparatus 200 that may be used for transmitting sidelink control information indicating no sidelink data. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

According to the invention as claimed, the processor 202 determines that there is no sidelink data available for a destination. The transmitter 210 transmits sidelink control information to the destination that indicates that there is no sidelink data available for the destination and triggers a channel state information feedback response from the destination, wherein the processor monitors for reception of the channel state information feedback response from the destination.

In certain embodiments, the receiver 212 may receive information indicating a discontinuous transmission. In various embodiments, the processor 202 may: increment a discontinuous transmission counter of a radio link failure procedure; and start a discontinuous transmission timer.

In some embodiments, the processor 202 may: perform a logical channel prioritization procedure; and determine, based on the logical channel prioritization procedure, that a transport block contains only data of logical channels having hybrid automatic repeat request feedback disabled. In various embodiments, the transmitter 210 may transmit sidelink control information indicating that hybrid automatic repeat request feedback is enabled for transmission of the transport block.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

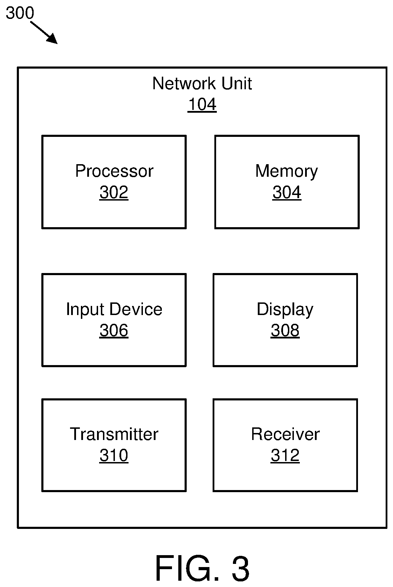

Figure 3 depicts one embodiment of an apparatus 300 that may be used for transmitting sidelink control information indicating no sidelink data. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In some embodiments, such as using a user equipment ("UE") to network ("Uu") interface (e.g., NR, LTE), radio link monitoring ("RLM") may be performed. If a RLM procedure indicates that the UE is out of sync with respect to DL (e.g., a hypothetical block error rate ("BLER") target for a physical downlink control channel ("PDCCH") exceeds a threshold such as 10%) for a time duration, the UE may declare a radio link failure ("RLF") and may initiate a recovery procedure. The recovery on Uu may include trying to re-establish a radio resource control ("RRC") connection on a different cell. In direct communication between UEs ("PC5"), it may be meaningful to perform radio link monitoring to determine if a radio link between two UEs is sufficiently good and, if not, the UEs may not unnecessarily attempt transmission to the other UE. In certain embodiments, after having declared RLF, UEs may immediately or later clear a context for another UE and free memory space.

In various embodiments, a RLF mechanism at a transmit ("TX") UE may be based on hybrid automatic repeat request ("HARQ") feedback. In certain embodiments, a TX UE counts a number of consecutive discontinuous transmissions ("DTX") received from a receive ("RX") UE in response to a physical sidelink shared channel ("PSSCH") transmission. In some embodiments, RLF may be declared and subsequent actions may be carried out if a counter exceeds a predefined threshold (e.g., x number of consecutive DTX received from the RX UE for a specific link and/or connection).

In certain embodiments, channel state information ("CSI") reporting may be used. A sidelink channel state information ("SL-CSI") reporting procedure may be used to provide a peer UE with sidelink channel state information. In various embodiments, a MAC entity may, for each pair of the source layer-2 identifier ("ID") and the destination layer-2 ID: if the SL-CSI reporting has been triggered by a SCI and not cancelled: 1) if the MAC entity has SL resources allocated for new transmission: a) instruct the multiplexing and assembly procedure to generate a sidelink CSI reporting MAC CE; b) cancel the triggered SL-CSI reporting; 2) else if the MAC entity has been configured by RRC to transmit using a SL-RNTI or SLCS-RNTI: trigger a scheduling request.

In some embodiments, an SCI format 0-1 may be used for scheduling PSSCH and 2nd-stage-SCI on PSSCH. The following information may be transmitted using the SCI format 0-1: 1) priority - 3 bits; 2) frequency resource

assignment - $\left\lceil \log_2 \left( \frac{N_{\text{subChannel}}^{\text{SL}} \left( N_{\text{subChannel}}^{\text{SL}} + 1 \right)}{2} \right) \right\rceil$ bits if the value of the higher layer parameter sl-MaxNumPerReserve is configured to 2; otherwise $\left\lceil \log_2 \left( \frac{N_{\text{subChannel}}^{\text{SL}} \left( N_{\text{subChannel}}^{\text{SL}} + 1 \right) \left( 2 N_{\text{subChannel}}^{\text{SL}} + 1 \right)}{6} \right) \right\rceil$ bits if the value of the higher layer parameter sl-MaxNumPerReserve is configured to 3; 3) time resource assignment - 5 bits if the value of the higher layer parameter sl-MaxNumPerReserve is configured to 2; otherwise 9 bits if the value of the higher layer parameter sl-MaxNumPerReserve is configured to 3; 4) resource reservation period - $\left\lceil \log_2 \left( N_{\text{reservPeriod}} \right) \right\rceil$ bits if higher parameter sl-MultiReserveResource is configured; 0 bits otherwise; 5) demodulation reference signal ("DMRS") pattern - [x] bits if more than one DMRS pattern is configured by higher layer parameter sl-PSSCH-DMRS-TimePattern; 0 bits otherwise; 6) 2nd-stage SCI format - [x] bits; 6) beta_offset indicator - [2] bits as provided by higher layer parameter sl-BetaOffsets2ndSCI; 7) number of DMRS ports - 1 bit; 8) modulation and coding scheme - 5 bits; and 9) reserved - [2 - 4] bits as determined by higher layer parameter sl-NumReservedBits with value set to zero.

In various embodiments, SCI format 0-2 is used for the decoding of a PSSCH transmission. The following information may be transmitted by means of the SCI format 0-2: HARQ process ID - [x] bits; new data indicator - 1 bit; redundancy version - 2 bits; source ID - 8 bits; destination ID - 16 bits; CSI request - 1 bit; if the 2nd-stage SCI format field in the corresponding SCI format 0-1 indicates type 1 groupcast, the following fields are present: zone ID - 12 bits; and communication range requirement - 4 bits.

In various embodiments, there may be an efficient radio link failure ("RLF") mechanism at a transmitter ("TX") user equipment ("UE") if the TX UE sends sidelink ("SL") data in a blind retransmission mode and hybrid automatic repeat request ("HARQ") feedback is disabled. In some embodiments, determining whether a transport block ("TB") is transmitted using a HARQ feedback mode depends on the configuration of a highest priority logical channel within a TB (e.g., it may happen that a UE uses blind retransmissions for some period of time) for a specific destination. In such embodiments, HARQ feedback may be enabled for every TB transmission for a specific destination.

According to the invention as claimed, channel state information ("CSI") feedback may be considered in addition to a HARQ feedback for a HARQ-based RLF mechanism running at a TX UE. In the absence of SL data for a destination for which the HARQ-based RLF procedure is running, the TX UE signals sidelink control information ("SCI") for the destination with a CSI request bit set to '1' (e.g., asking for CSI information). If the TX UE doesn't receive a CSI report from a receiver ("RX") UE even though requested, the TX UE considers the absence of a CSI medium access control ("MAC") control element ("CE") the same as a discontinuous reception ("DTX") for the HARQ-based RLF procedure. Moreover, if a MAC protocol data unit ("PDU") is sent to the RX UE without HARQ feedback support (e.g., using a blind retransmission mode) a CSI report may be used for the RLF procedure (e.g., the absence of a requested CSI report is considered and/or handled as being a DTX).

In a second embodiment, SCI-only may be transmitted without a corresponding physical sidelink shared channel ("PSSCH") transmission. To save sidelink ("SL") resources only the SCI without any PSSCH transmission may be sent. In such an embodiment, the SCI-only may be used if there is no SL data available for a destination and a TX UE wants to trigger HARQ feedback transmission of an RX UE for RLF measurements and/or procedures (e.g., HARQ-based RLF procedure). In one embodiment of the second embodiment, to reduce transmission power and to reduce interference, the TX UE may signal only SCI without a physical sidelink shared channel ("PSSCH") transmission. Upon reception of SCI-only, the RX UE may acknowledge the reception of the SCI by sending a hybrid automatic repeat request ("HARQ") acknowledgement ("ACK"). In some embodiments of the second embodiment, the SCI indicates that there is no associated PSSCH transmission (e.g., one of the reserved bits in a first stage SCI may be used to indicate the absence of the PSSCH transmission). In certain embodiments of the second embodiment, a field of the SCI or a combination of fields of the SCI is set to predefined values indicating the absence of the PSSCH transmission.

In a third embodiment, a UE starts a timer after having received a DTX from an RX UE and having incremented a DTX counter of a RLF procedure. Upon reception of a HARQ feedback (e.g., ACK and/or negative acknowledgement ("NACK")) or DTX, the timer is stopped if an ACK and/or NACK is received or restarted with reception of a next DTX. When the timer expires, the UE resets the DTX counter used for RLF detection to zero. The timer may be used to account for circumstances in which some TBs are transmitted in a blind retransmission mode where no HARQ feedback is received from RX UEs.

In a fourth embodiment, a UE may indicate within SCI that HARQ feedback is enabled, even though as a result of a logical channel prioritization ("LCP") procedure the TB contains only data of logical channels ("LCHs") for which HARQ feedback is disabled. As may be appreciated, overriding a LCH configuration by a network may be useful if HARQ feedback is required for a RLF mechanism to work properly. In one embodiment of the fourth embodiment, a TX UE may use a mixed mode of operation for transmission of a TB, where the TX UE asks for HARQ feedback from the RX UE after a certain number of blind retransmissions. The number of (re)transmissions after which TX UE requests HARQ feedback, e.g., HARQ feedback is enabled for any further retransmission, may be preconfigured or determined by the TX UE. In another embodiment of the fourth embodiment, the TX UE may enable SL HARQ feedback based on a distance between multiple resources indicated in DCI (e.g., if a distance between multiple resource is such that it could fulfil HARQ round trip reception timing, then SL HARQ feedback is enabled by the TX UE).

As may be appreciated, any of the embodiments described herein may be configurable for a given destination identifier ("ID"), pair of source layer-2 ID and destination layer-2 ID corresponding to a UE to UE interface ("PC5") radio resource control ("RRC") connection and/or SL LCH. For specific destinations and/or LCHs, a UE may rely on upper layer keep alive messages.

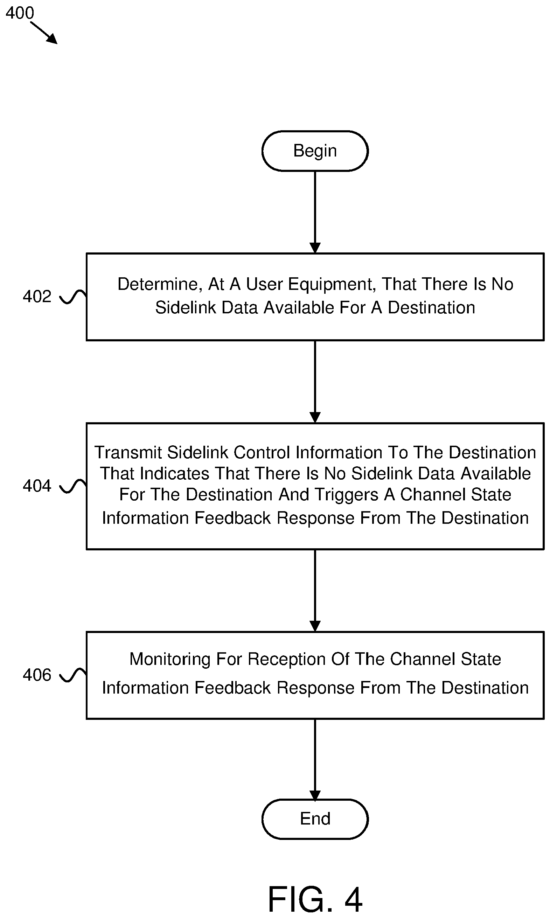

Figure 4 is a flow chart diagram illustrating one embodiment of a method 400 for transmitting sidelink control information indicating no sidelink data. In some embodiments, the method 400 is performed by an apparatus, such as the remote unit 102. In certain embodiments, the method 400 may be performed by a processor executing program code, for example, a microcontroller, a microprocessor, a CPU, a GPU, an auxiliary processing unit, a FPGA, or the like.

In various embodiments, the method 400 includes determining 402, at a user equipment, that there is no sidelink data available for a destination. In some embodiments, the method 400 includes, transmitting 404 sidelink control information to the destination that indicates that there is no sidelink data available for the destination and triggers a channel state information feedback response from the destination. In certain embodiments, the method 400 includes monitoring 406 for reception of the channel state information feedback response from the destination.

In certain embodiments, the sidelink control information comprises a channel state information request bit that indicates a request for a channel state information feedback response.

According to the invention as claimed, the method further comprises, in response to monitoring for reception of the channel state information feedback response resulting in not receiving the channel state information feedback response, indicating a discontinuous transmission.

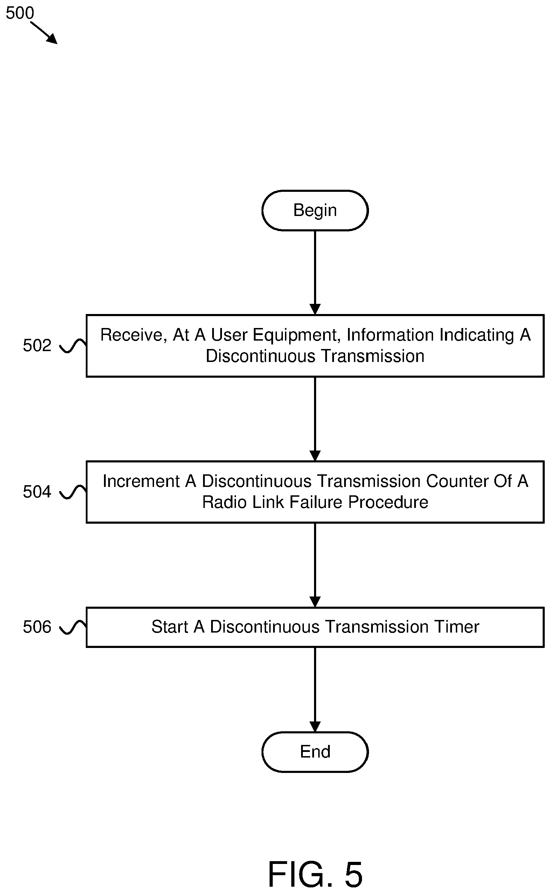

Figure 5 is a flow chart diagram illustrating one embodiment of a method 500 for a radio link failure procedure. In some embodiments, the method 500 is performed by an apparatus, such as the remote unit 102. In certain embodiments, the method 500 may be performed by a processor executing program code, for example, a microcontroller, a microprocessor, a CPU, a GPU, an auxiliary processing unit, a FPGA, or the like.

In various embodiments, the method 500 includes receiving 502, at a user equipment, information indicating a discontinuous transmission. In some embodiments, the method 500 includes incrementing 504 a discontinuous transmission counter of a radio link failure procedure. In certain embodiments, the method 500 includes starting 506 a discontinuous transmission timer.

In certain embodiments, the method further comprises stopping the discontinuous transmission timer in response to receiving hybrid automatic repeat request feedback. In some embodiments, the method further comprises restarting the discontinuous transmission timer in response to receiving information indicating a second discontinuous transmission. In various embodiments, the method further comprises, in response to the discontinuous transmission timer expiring, resetting the discontinuous transmission counter to zero.

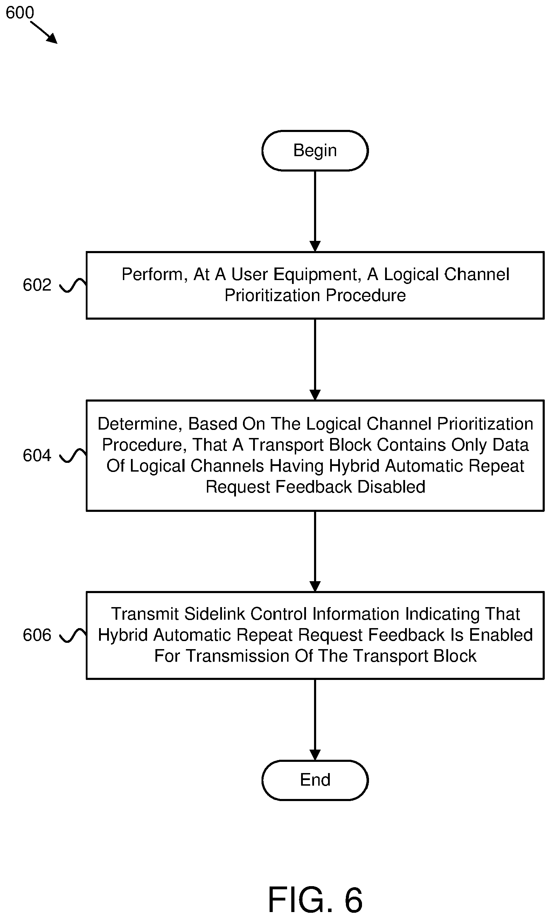

Figure 6 is a flow chart diagram illustrating one embodiment of a method 600 for a logical channel prioritization procedure. In some embodiments, the method 600 is performed by an apparatus, such as the remote unit 102. In certain embodiments, the method 600 may be performed by a processor executing program code, for example, a microcontroller, a microprocessor, a CPU, a GPU, an auxiliary processing unit, a FPGA, or the like.

In various embodiments, the method 600 includes performing 602, at a user equipment, a logical channel prioritization procedure. In some embodiments, the method 600 includes determining 604, based on the logical channel prioritization procedure, that a transport block contains only data of logical channels having hybrid automatic repeat request feedback disabled. In certain embodiments, the method 600 includes transmitting 606 sidelink control information indicating that hybrid automatic repeat request feedback is enabled for transmission of the transport block.

In certain embodiments, transmitting the sidelink control information indicating that hybrid automatic repeat request feedback is enabled comprises transmitting the sidelink control information indicating that hybrid automatic repeat request feedback is enabled after transmitting a predetermined number of blind retransmissions. In some embodiments, transmitting the sidelink control information indicating that hybrid automatic repeat request feedback is enabled comprises transmitting the sidelink control information indicating that hybrid automatic repeat request feedback is enabled in response to a distance between resources being less than a threshold distance.

In one embodiment, a method comprises: determining, at a user equipment, that there is no sidelink data available for a destination; transmitting sidelink control information to the destination that indicates that there is no sidelink data available for the destination and triggers a channel state information feedback response from the destination; and monitoring for reception of the channel state information feedback response from the destination.

In certain embodiments, the sidelink control information comprises a channel state information request bit that indicates a request for a channel state information feedback response.

In some embodiments, the method further comprises, in response to monitoring for reception of the channel state information feedback response resulting in not receiving the channel state information feedback response, indicating a discontinuous transmission.

In one embodiment, an apparatus comprises a user equipment, the apparatus further comprises: a processor that determines that there is no sidelink data available for a destination; and a transmitter that transmits sidelink control information to the destination that indicates that there is no sidelink data available for the destination and triggers a channel state information feedback response from the destination; wherein the processor monitors for reception of the channel state information feedback response from the destination.

In certain embodiments, the sidelink control information comprises a channel state information request bit that indicates a request for a channel state information feedback response.

In some embodiments, the processor, in response to monitoring for reception of the channel state information feedback response resulting in not receiving the channel state information feedback response, indicates a discontinuous transmission.

In one embodiment, a method comprises: receiving, at a user equipment, information indicating a discontinuous transmission; incrementing a discontinuous transmission counter of a radio link failure procedure; and starting a discontinuous transmission timer.

In certain embodiments, the method further comprises stopping the discontinuous transmission timer in response to receiving hybrid automatic repeat request feedback.

In some embodiments, the method further comprises restarting the discontinuous transmission timer in response to receiving information indicating a second discontinuous transmission.

In various embodiments, the method further comprises, in response to the discontinuous transmission timer expiring, resetting the discontinuous transmission counter to zero.

In one embodiment, an apparatus comprises a user equipment, the apparatus further comprises: a receiver that receives information indicating a discontinuous transmission; and a processor that: increments a discontinuous transmission counter of a radio link failure procedure; and starts a discontinuous transmission timer.

In certain embodiments, the processor stops the discontinuous transmission timer in response to receiving hybrid automatic repeat request feedback.

In some embodiments, the processor restarts the discontinuous transmission timer in response to receiving information indicating a second discontinuous transmission.

In various embodiments, the processor, in response to the discontinuous transmission timer expiring, resets the discontinuous transmission counter to zero.

In one embodiment, a method comprises: performing, at a user equipment, a logical channel prioritization procedure; determining, based on the logical channel prioritization procedure, that a transport block contains only data of logical channels having hybrid automatic repeat request

feedback disabled; and transmitting sidelink control information indicating that hybrid automatic repeat request feedback is enabled for transmission of the transport block.

In certain embodiments, transmitting the sidelink control information indicating that hybrid automatic repeat request feedback is enabled comprises transmitting the sidelink control information indicating that hybrid automatic repeat request feedback is enabled after transmitting a predetermined number of blind retransmissions.

In some embodiments, transmitting the sidelink control information indicating that hybrid automatic repeat request feedback is enabled comprises transmitting the sidelink control information indicating that hybrid automatic repeat request feedback is enabled in response to a distance between resources being less than a threshold distance.

In one embodiment, an apparatus comprises a user equipment, the apparatus further comprises: a processor that: performs a logical channel prioritization procedure; and determines, based on the logical channel prioritization procedure, that a transport block contains only data of logical channels having hybrid automatic repeat request feedback disabled; and a transmitter that transmits sidelink control information indicating that hybrid automatic repeat request feedback is enabled for transmission of the transport block.

In certain embodiments, the transmitter transmitting the sidelink control information indicating that hybrid automatic repeat request feedback is enabled comprises the transmitter transmitting the sidelink control information indicating that hybrid automatic repeat request feedback is enabled after transmitting a predetermined number of blind retransmissions.

In some embodiments, the transmitter transmitting the sidelink control information indicating that hybrid automatic repeat request feedback is enabled comprises the transmitter transmitting the sidelink control information indicating that hybrid automatic repeat request feedback is enabled in response to a distance between resources being less than a threshold distance.

Embodiments may be practiced in other specific forms. The described embodiments are to be considered in all respects only as illustrative and not restrictive. The scope of the invention is indicated by the appended claims rather than by the foregoing description.

**Claims**

1. A method (400) performed by a user equipment, UE, the method comprising:

   determining (402) that there is no sidelink data available for a destination;
   transmitting (404) sidelink control information, SCI, to the destination, wherein the SCI indicates that there is no sidelink data available for the destination and triggers a channel state information, CSI, feedback response from the destination;
   monitoring (406) for reception of the CSI feedback response from the destination; and
   indicating a discontinuous transmission, DTX, in response to monitoring for reception of the CSI feedback response resulting in not receiving the CSI feedback response.

2. The method (400) of claim 1, wherein the SCI comprises a CSI request bit that indicates a request for the CSI feedback response.

3. A user equipment, UE, (200) comprising:

   a processor (202) arranged to determine that there is no sidelink data available for a destination; and
   a transmitter (210) arranged to transmit sidelink control information, SCI, to the destination, wherein the SCI indicates that there is no sidelink data available for the destination and triggers a channel state information, CSI, feedback response from the destination;
   wherein the processor (202) is further arranged to monitor for reception of the CSI feedback response from the destination; and
   wherein the processor (202) is further arranged to indicate a discontinuous transmission, DTX, in response to monitoring for reception of the CSI feedback response resulting in not receiving the CSI feedback response.

4. The UE (200) of claim 3, wherein the SCI comprises a CSI request bit that indicates a request for the CSI feedback response.

**Patentansprüche**

1. Verfahren (400), das durch eine Benutzereinrichtung, UE, durchgeführt wird, das Verfahren umfassend:

   Bestimmen (402), dass für ein Ziel keine Sidelink-Daten verfügbar sind;
   Übertragen (404) von Sidelink-Steuerinformationen, SCI, an das Ziel, wobei die SCI anzeigen, dass für das Ziel keine Sidelink-Daten verfügbar sind, und eine Kanalzustandsinformationenrückmeldungsantwort, CSI-Rückmeldungsantwort, von dem Ziel auslösen;
   Überwachen (406) eines Empfangs der CSI-Rückmeldungsantwort von dem Ziel; und
   Anzeigen einer diskontinuierlichen Übertragung, DTX, als Reaktion auf das Überwachen des Empfangs der CSI-Rückmeldungsantwort, was dazu führt, dass die CSI-Rückmeldungsantwort nicht empfangen wird.

2. Verfahren (400) nach Anspruch 1, wobei die SCI ein CSI-Anforderungsbit umfassen, das eine Anforderung für die CSI-Rückmeldungsantwort anzeigt.

3. Benutzereinrichtung, UE, (200), umfassend:

   einen Prozessor (202), der eingerichtet ist, um zu bestimmen, dass für ein Ziel keine Sidelink-Daten verfügbar sind; und
   einen Sender (210), der eingerichtet ist, um Sidelink-Steuerinformationen, SCI, an das Ziel zu senden, wobei die SCI anzeigen, dass für das Ziel keine Sidelink-Daten verfügbar sind, und eine Kanalzustandsinformationenrückmeldung, CSI-Rückmeldungsantwort, von dem Ziel auslösen;
   wobei der Prozessor (202) ferner eingerichtet ist, um den Empfang der CSI-Rückmeldung von dem Ziel zu überwachen; und
   wobei der Prozessor (202) ferner eingerichtet ist, um als Reaktion auf das Überwachen des Empfangs der CSI-Rückmeldungsantwort eine diskontinuierliche Übertragung, DTX, anzuzeigen, was dazu führt, dass die CSI-Rückmeldungsantwort nicht empfangen wird.

**4.** UE (200) nach Anspruch 3, wobei die SCI ein CSI-Anforderungsbit umfassen, das eine Anforderung für die CSI-Rückmeldungsantwort anzeigt.

**Revendications**

**1.** Procédé (400) effectué par un équipement utilisateur, UE, le procédé comprenant :

la détermination (402) qu'il n'y a aucune donnée de liaison latérale disponible pour une destination ;
la transmission (404) d'informations de commande de liaison latérale, SCI, à la destination, dans lequel les SCI indiquent qu'il n'y a aucune donnée de liaison latérale disponible pour la destination et déclenchent une réponse de rétroaction d'informations d'état de canal, CSI, en provenance de la destination ;
la surveillance (406) de réception de la réponse de rétroaction de CSI en provenance de la destination ; et
l'indication d'une transmission discontinue, DTX, en réponse à la surveillance de réception de réponse de rétroaction de CSI résultant en la non-réception de la réponse de rétroaction de CSI.

**2.** Procédé (400) selon la revendication 1, dans lequel les SCI comprennent un bit de demande de CSI qui indique une demande de réponse de rétroaction de CSI.

**3.** Équipement utilisateur, UE, (200) comprenant :

un processeur (202) agencé pour déterminer qu'il n'y a aucune donnée de liaison latérale disponible pour une destination ; et
un transmetteur (210) agencé pour transmettre des informations de commande de liaison latérale, SCI, à la destination, dans lequel les SCI indiquent qu'il n'y a aucune donnée de liaison latérale disponible pour la destination et déclenchent une réponse de rétroaction d'informations d'état de canal, CSI, en provenance de la destination ;
dans lequel le processeur (202) est agencé en outre pour surveiller la réception de la réponse de rétroaction de CSI en provenance de la destination ; et
dans lequel le processeur (202) est agencé en outre pour indiquer une transmission discontinue, DTX, en réponse à la surveillance de réception de la réponse de rétroaction de CSI résultant en la non-réception de la réponse de rétroaction de CSI.

**4.** UE (200) selon la revendication 3, dans lequel les SCI comprennent un bit de demande CSI qui indique une demande de réponse de retour de CSI.

100

104

104

104

102

102

102

FIG. 1

200

Remote Unit
102

| | |
|---|---|
| Processor 202 | Memory 204 |
| Input Device 206 | Display 208 |
| Transmitter 210 | Receiver 212 |

FIG. 2

300

Network Unit
104

| Processor 302 | Memory 304 |
| Input Device 306 | Display 308 |
| Transmitter 310 | Receiver 312 |

FIG. 3

400

Begin

402 — Determine, At A User Equipment, That There Is No Sidelink Data Available For A Destination

404 — Transmit Sidelink Control Information To The Destination That Indicates That There Is No Sidelink Data Available For The Destination And Triggers A Channel State Information Feedback Response From The Destination

406 — Monitoring For Reception Of The Channel State Information Feedback Response From The Destination

End

FIG. 4

500

Begin

502 Receive, At A User Equipment, Information Indicating A Discontinuous Transmission

504 Increment A Discontinuous Transmission Counter Of A Radio Link Failure Procedure

506 Start A Discontinuous Transmission Timer

End

FIG. 5

600

Begin

602 Perform, At A User Equipment, A Logical Channel Prioritization Procedure

604 Determine, Based On The Logical Channel Prioritization Procedure, That A Transport Block Contains Only Data Of Logical Channels Having Hybrid Automatic Repeat Request Feedback Disabled

606 Transmit Sidelink Control Information Indicating That Hybrid Automatic Repeat Request Feedback Is Enabled For Transmission Of The Transport Block

End

FIG. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63022994

**Non-patent literature cited in the description**

- **SAMSUNG**. On Physical Layer Procedures for NR V2X. *R1-1906941*, 13 May 2019
- **SAMSUNG**. On Physical Layer Procedures for NR V2X. *R1-1908481*, 26 August 2019
- **HUAWEI**. Sidelink physical layer procedures for NR V2X. *R1-1910059*, 14 October 2019